# EUROPÄISCHE PATENTSCHRIFT

(11) **EP 0 824 424 B1**
(45) Veröffentlichungstag und Bekanntmachung des Hinweises auf die Patenterteilung: **23.01.2002**
(21) Anmeldenummer: 97903362.8
(22) Anmeldetag: 23.02.1997
(51) Int. Cl.: B60S 1/34, B60S 1/36

(54) **SCHEIBENWISCHERANLAGE**
WINDSCREEN-WIPER ARRANGEMENT
SYSTEME D'ESSUIE-GLACE

(30) Priorität: 28.02.1996 DE 19607533
(43) Veröffentlichungstag der Anmeldung: 25.02.1998
(73) Patentinhaber: Krupp Presta Aktiengesellschaft, 9492 Eschen (LI)
(72) Erfinder: KRÄTTLI, Christian, CH-7204 Untervaz (CH); KUNZ, Markus, CH-7302 Landquart (CH)
(74) Vertreter: Torggler, Paul Norbert, Dr.
(86) Internationale Anmeldenummer: EP9700869
(87) Internationale Veröffentlichungsnummer: WO9731807

(56) Entgegenhaltungen:
- WO-A-90/11209
- DE-B- 1 039 380
- PATENT ABSTRACTS OF JAPAN vol. 011, no. 086 (M-572), 17.März 1987 & JP 61 241237 A (HIDEO FUJIWARA), 27.Oktober 1986,

## Beschreibung

Die Erfindung betrifft eine Scheibenwischeranflage, insbesondere für Personenkraftwagen, mit einem hin und her schwenkend angetriebenen Wischerarm, der einen ersten um eine Lagerachse schwenkbar gelagerten Wischerarmteil und einen im ersten Wischerarmteil längsverschiebbaren zweiten Wischerarmteil aufweist, an dessen freiem Ende ein Wischerblattdrehlager und ein mit dem Schwenkantrieb gekoppeltes Wischerblatt angeordnet sind, das innerhalb einer ersten Verschiebelänge einen Drehantrieb aufweist, der bei maximaler Verkürzung des Wischerarmes für die Verschwenkung in die Parkstellung außer Funktion gesetzt ist, wobei der Drehantrieb über eine längenveränderbare Antriebswelle erfolgt.

Eine derartige Scheibenwischeranlage ist beispielsweise der WO-A 90/11209, siehe insbesondere Seite 10, Zeilen 21 bis 26 hinsichtlich längenveränderbarer Antriebswelle zu entnehmen. Die beiden Wischerarmteile sind flache Schienen und weisen, um möglichst verwindungsstabil zu sein, eine relativ große Breite auf, die unter Umständen die Sicht des Fahrzeuglenkers beeinträchtigt. Die Breite des Wischerarmes bietet Platz, um einen in der Länge sich anpassenden Seilzug für die Verdrehung des Wischerblattes relativ zum Wischerarm vorzusehen, an dessen Stelle auch die längenveränderbare Antriebswelle treten kann. Das Wischerblatt überstreicht dank entsprechender Bewegungssteuerung die Windschutzscheibe im wesentlichen vollflächig von Seitenrand zu Seitenrand, wobei der schwenkende Wischerarm aus einer kurzen mittleren Arbeitsstellung sich nach beiden Seiten verlängert und wieder verkürzt. Aus der kurzen Mittelstellung kann der Wischerarm ohne Verdrehung des Wischerblattes in eine Parkstellung an den unteren Scheibenrand abgeschwenkt werden, wofür der Drehantrieb des Wischerblattes außer Funktion gesetzt wird, und ein eigener Stellantrieb erforderlich ist.

Eine weitere Scheibenwischeranlage ist aus der DE-B 10 39 380 bekannt. Diese zeigt einen Scheibenwischer, dessen Wischerarm durch ein Hohlprofil gebildet ist, in dem eine längenkonstante Antriebswelle geringfügig längsverschiebbar gelagert ist, wobei ein vorderes Endstück als Zahnstange ausgebildet ist, über die die Schwenkbewegung des Wischerarmes in eine Drehbewegung des Wischerblattes umgesetzt wird. Das Wischerblatt ist an einem am vorderen Ende des Wischerarmes drehbar gelagerten Wischerblatthalter angeordnet, an dem ein in die Zahnstange eingreifendes Zahnrad vorgesehen ist.

Die Erfindung hat es sich zur Aufgabe gestellt, bei einem derartigen, eine längenveränderbare Antriebswelle umfassenden Scheibenwischer die Ausschaltung des Drehantriebes während der Verschwenkung in die Parkstellung zu vereinfachen, und erreicht dies dadurch, daß der zweite Wischerarmteil ein im ersten Wischerarmteil verschiebbares Hohlprofil aufweist, durch das die längenveränderbare Antriebswelle zum Wischerblattdrehlager geführt ist, und daß im Anschluß an die erste Verschiebelänge eine zweite Verschiebelänge definiert ist, innerhalb der bei einem weiteren Verkürzen des Wischerarmes der Formschluß im Drehantrieb aufgehoben ist. Dies bewirkt nicht nur einen ausreichend verwindungssteifen Aufbau des Wischerarmes, sondern es kann auch der Drehantrieb des Wischerblattes besonders platzsparend untergebracht werden. Für die Aufhebung des Formschlusses im Drehantrieb innerhalb der zweiten Verschiebelänge bieten sich mehrere Möglichkeiten, beispielsweise durch Ausbildung eines zylindrischen Bereiches an der Verlängerungswelle, deren Durchmesser der lichten Weite der Gleitbuchse entspricht und der innerhalb der zweiten Verschiebelänge in die Gleitbuchse eingetreten ist. Dadurch ist während des Verschwenkens in die Parkstellung der Drehantrieb des Wischerblattes unterbrochen, obwohl die Hohlwelle mit dem Antrieb verbunden ist. Ebenso kann aber auch der Formschluß zwischen der Hohlwelle und ihrem Antrieb unterbrochen werden. Äußere Drehbeanspruchungen des Wischerblattes können dabei dadurch aufgefangen werden, daß beim Einziehen des das Wischerblatt tragenden Hohlprofiles das Wischerblatt in eine am ersten Wischerarmteil ausgebildete Ausnehmung eintritt, und darin gehalten wird.

Für die verdrehsichere Führung des zweiten Hohlprofiles im ersten Hohlprofil ist weiters bevorzugt vorgesehen, daß am hinteren Ende des Hohlprofiles ein Schlitten angeordnet ist, der einander gegenüberliegende Nuten aufweist, und daß der erste Wischerarmteil zwei in einer zur Windschutzscheibe annähernd parallelen Ebene liegende Stege aufweist, die in die Nuten des Schlittens eingreifen. Falls der Platz ausreicht, kann auch zumindest ein weiterer Steg am ersten Wischerarmteil vorgesehen, und der Schlitten mit einer weiteren Nut versehen sein. Der dritte Steg kann sich beispielsweise nach unten oder oben erstrecken, sodaß eine etwa T-förmige Führung gegeben ist. Die Nuten und Stege können beliebige Querschnittsform aufweisen, beispielsweise eine Keilform, rechteckig, schwalbenschwanzförmig, usw.

In einer bevorzugten Ausführung ist vorgesehen, daß die Antriebswelle aus einer Hohlwelle und aus einer in der Hohlwelle verschiebbaren Verlängerungswelle zusammengesetzt ist, die über die erste Verschiebelänge in die Hohlwelle in Umfangsrichtung formschlüssig eingreift. Die Verlängerungswelle ist im Querschnitt insbesondere sechseckig, kann jedoch auch jede andere unrunde Form aufweisen. Die erste Verschiebelänge entspricht dabei der notwendigen Abstandsänderung zwischen dem Drehlager des Wischerblattes und dem Schwenklager des Wischerarmes während des Wischvorganges, In der bevorzugt durch ein Rohr gebildeten Hohlwelle wird der Formschluß in Umfangsrichtung dadurch ermöglicht, daß am Ende der Hohlwelle eine Gleitbuchse vorgesehen ist, deren Querschnittsfläche der Querschnittsfläche der Verlängerungswelle über ihre erste Verschiebelänge entspricht.

Für die Verschiebebewegung des Hohlprofiles wird in einer bevorzugten Ausführung im ersten Wischerarmteil ein Zahnriemen über eine hintere angetriebene Zahnriemenscheibe und eine vordere Zahnriemenscheibe geführt, wobei der Zahnriemen an einem mit dem Hohlprofil verbundenen Mitnehmer befestigt ist. Der Antrieb erfolgt bevorzugt mittels eines drehrichtungsumkehrbaren Elektromotors, wobei das das Wischerblatt tragende Hohlprofil auch um die zweite Verschiebelänge für die Verschwenkung in die Parkstellung ebenfalls mittels des Zahnriemens und des Elektromotors verschoben wird. Für die exakte Steuerung der Wischerarmbewegung kann die Erfassung der Verschiebelängen von Vorteil sein. Hiefür sieht eine weitere bevorzugte Ausführung vor, daß dem ersten Wischerarmteil und dem Mitnehmer bzw. dem Schlitten eine Verschiebelängenmeßanordnung zugeordnet ist.

In einer weiteren bevorzugten Ausführung ist vorgesehen, daß in das Hohlprofil ein Lagerblock eingesetzt ist, in dem ein sich beim Einsetzen des Lagerblockes mit dem Übertragungselement des Drehantriebs kraftschlüssig verbindendes Antriebselement des Wischerblattes drehbar gelagert ist. Dadurch ist ein sehr einfacher, leicht montierbarer Zusammenbau des Wischerarmes möglich, da die Verbindung zwischen dem Drehantrieb und dem Antriebselement nicht eigens hergestellt werden muß, es genügt vielmehr, den Lagerblock ins Hohlprofil einzusetzen und mechanisch zu fixieren. Für die mechanische Verbindung ist bevorzugt vorgesehen, daß das Hohlprofil und der Lagerblock miteinander fluchtende Querbohrungen aufweisen, und daß am vorderen Ende des Wischerarmes eine Abdeckung fixiert ist, die einen in beide Querbohrungen eingreifenden Haltezapfen aufweist. Besonders vorteilhaft ist es dabei, wenn die Abdeckung auf dem Hohlprofil verrastet ist.

Das Antriebselement ist in einer bevorzugten Ausführung mit einem Lagerzapfen verbunden, insbesondere verpreßt, der in die Querbohrung des Lagerblockes eingreift und einen Haltebügel für das Wischerblatt aufweist. Das Antriebselement weist insbesondere einen radial abstehenden Fortsatz mit der Form eines Kreisausschnittes auf, dessen Zentriwinkel dem Schwenkwinkel des Wischerarmes entspricht und an dessen Rand eine bogenförmige Verzahnung vorgesehen ist, die mit einem Ritzel des Übertragungselementes zusammenwirkt, wobei die Achse des Ritzels sich in Längsrichtung des Wischerarmes erstreckt.

Nachstehend wird nun die Erfindung anhand der Figuren der beiliegenden Zeichnungen näher beschrieben, ohne darauf beschrankt zu sein:

Es zeigen:
Fig. 1 einen geteilten Längsschnitt durch einen Scheibenwischer in seiner kürzesten Wischstellung,
Fig. 2 einen Schnitt nach der Linie ll-ll der Fig. 1,
Fig. 3 einen Schnitt nach der Linie III-III der Fig. 1,
Fig. 4 einen Schnitt nach der Linie IV-IV der Fig. 1,
Fig. 5 einen Längsschnitt durch das das Wischerblatt tragende Ende eines Wischerarmes nach der Linie V-V von Fig. 6,
Fig. 6 einen Schnitt nach der Linie VI-VI von Fig. 5, und
Fig. 7 einen Schnitt nach der Linie VII-VII von Fig. 5.

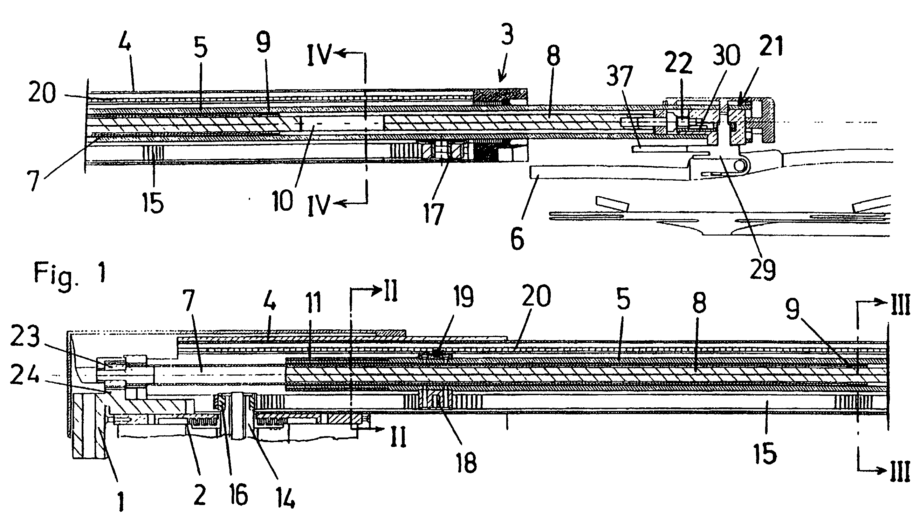

Eine erfindungsgemäße Scheibenwischeranlage, die insbesondere für die Windschutzscheibe aber auch für die Heckscheibe von Kraftfahrzeugen eingesetzt werden kann, weist zumindest einen Grundkörper 2 auf, der um eine Schwenkachse schwenkbar an der Fahrzeugkarosserie angeordnet ist, und einen Wischerarm 3 trägt. Am freien Ende des Wischerarmes 3 ist ein Wischerblattdrehlager 21 vorgesehen, an dem ein Wischerblatt 6 angeordnet ist. Der Wischerarm 3 umfaßt einen vom Grundkörper 2 abstehenden, ersten Wischerarmteil 4 und ein im ersten Wischerarmteil 4 verschiebbares Hohlprofil 5. Fig. 1 zeigt nur für die Längenänderung des Wischerarmes 3 und die Verdrehung des Wischerblattes 6 wesentliche Antriebsmerkmale, hingegen sind die übrigen Details des Schwenk- und des Wischerantriebes nicht gezeigt.

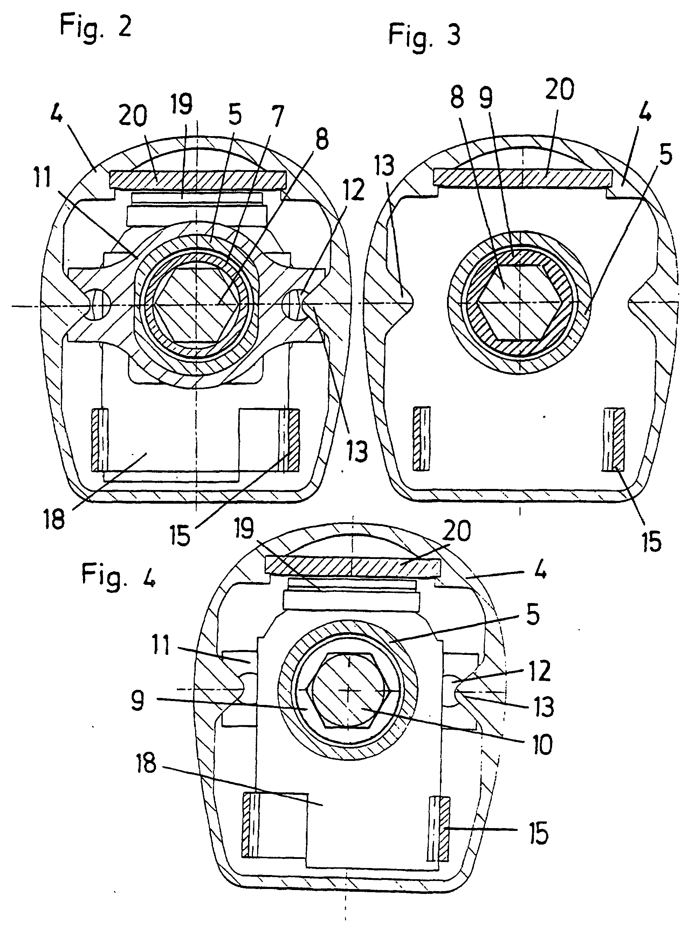

Wie Fig. 2 bis 4 deutlich zeigt, weist der erste Wischerarmteil 4 ein im wesentlichen vierseitiges Hohlprofil auf, das im Grundkörper 2 fixiert ist. An den beiden Seitenwänden des ersten Wischerarmteiles 4 ist jeweils ein nach innen vorspringender Steg 13 mit beispielsweise dreieckigem Querschnitt vorgesehen, die eine etwa parallel zur Fahrzeugscheibe verlaufende Ebene definieren und zur Führung eines Schlittens 11 dienen. Der Schlitten 11 weist hiefür Nuten 12, vorzugsweise Keilnuten, auf, und ist am hinteren, grundkörperseitigen Ende des verschiebbaren Hohlprofiles 5. das den zweiten Wischerarmteil bildet, fixiert.

Für den Verschiebeantrieb des Hohlprofiles 5 ist im Grundkörper 2 eine Antriebswelle 14 vorgesehen, die eine Zahnnemenscheibe 16 trägt. Eine zweite Zahnriemenscheibe 17 ist am vorderen Ende des ersten Wischerarmteiles 4 vorgesehen. Über beide Zahnnemenscheiben 16,17 ist unterhalb des Hohlprofiles 5 ein Zahnriemen 15 geführt. und seine beiden Enden sind an einem Mitnehmer 18 befestigt. Der Mitnehmer 18 ist im Anschluß an den Schlitten 11 mit dem Hohlprofil 5 verbunden (Fig. 2,4). Der Mitnehmer 18 könnte auch durch den Schlitten 11 gebildet sein, der dann mit einem entsprechenden, nach unten ragenden Befestigungsfortsatz versehen ist. Falls eine exakte Erfassung der Verschiebelänge des Hohlprofiles 5 erwünscht ist, kann im ersten Wischerarmteil 4 eine Sensoreinrichtung vorgesehen sein, die eine oberhalb des Hohlprofiles 5 sich parallel dazu im ersten Wischerarmteil 4 erstreckende Skala 20 und eine mit dem Mitnehmer 18 oder dem Schlitten 11 verbundenen Positionsdetektor 19 umfaßt. Die Arbeitsweise der Sensoreinrichtung nchtet sich nach den Gegebenheiten, sie kann auf einer optischen, akustischen, elektrischen oder auch mechanischen Basis beruhen.

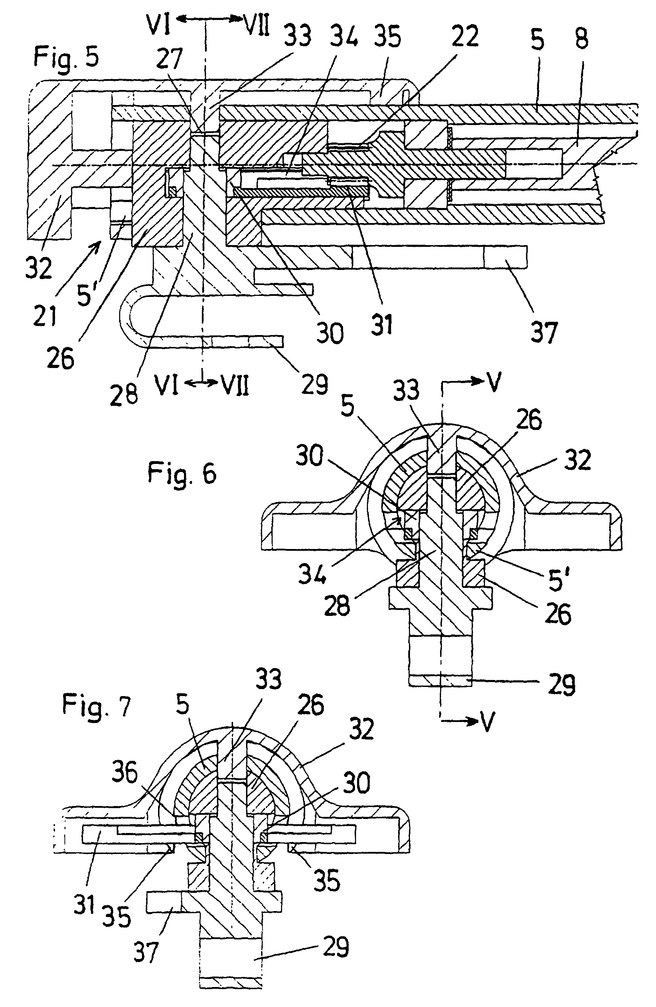

Um das Wischerblatt 6 relativ zum Wischerarm 3 während dessen Verschwenkung zu verdrehen, sodaß es sich im wesentlichen parallel zu sich selbst und zu den Seitenrändern der Fahrzeugscheibe über die Scheibe bewegt, ist eine sich vom Grundkörper 2 zum Wischerblattdrehlager 21 erstreckende, längenveränderbare Antriebswelle vorgesehen. Diese weist eine im Grundkörper 2 bzw. im ersten Wischerarmteil 4 gelagerte Hohlwelle 7 und eine in der Hohlwelle 7 verschiebbare Verlängerungswelle 8 auf. Die Hohlwelle 7 ist am grundkörperseitigen Ende mit einem Antriebsritzel 23 versehen, das in einer Kreisbogenverzahnung 24 abrollt, die an einem karosseriefesten Bauteil 1 vorgesehen ist. Die Antriebswelle wird daher bei der Schwenkbewegung des Grundkörpers 2 und des Wischerarmes 3 wechselnd angetrieben und überträgt die Bewegung über ein zweites Ritzel 22, das am vorderen Ende der Verlängerungswelle 8 angeordnet ist, an ein im Wischerblattdrehlager 21 drehbar gelagertes Antriebselement 30 des Wischerblattes 6. Zur einfachen Montage des Wischerarmdrehlagers 21 weist, wie die Fig. 5 bis 7 im Detail zeigen, das Hohlprofil 5 einen endseitig offenen Schlitz an der Unterseite und zwei einander gegenüberliegende endseitig offene. seitliche Schlitze auf, die in den beiden unteren Vierteln des Hohlprofiles 5 ausgebildet sind, sodaß zwei Stege 5' verbleiben. Ein Lagerblock 26 des Wischerblattdrehlagers 21 ist endseitig in das Hohlprofil 5 eingeschoben und weist einen durch den Schlitz an der Unterseite vorstehenden Führungs- und Anschlagbereich auf. In der Höhe der beiden seitlichen Schlitze ist im Lagerblock 26 ein Schlitz 34 vorgesehen, der an der Seite des Ritzels 22 offen ist, und das Antriebselement 30 aufnimmt. Der Lagerblock 26 weist weiters eine Querbohrung 27 auf, die den Schlitz 34 durchsetzt und in der ein Lagerzapfen 28 drehbar gelagert ist, auf dem im Schlitz 34 das Antriebselment 30 fixiert ist, und der einen Haltebügel 29 für das Wischerblatt sowie einen abstehenden Steg mit einer Nase 37 trägt. Das Antriebselement 30 weist eine auf dem Lagerzapfen 28 angeordnete Hülse, sowie einen radial abstehenden Fortsatz mit der annähernden Form eines Kreisausschnittes auf, dessen Zentriwinkel etwa dem Schwenkwinkel des Wischerarmes entspricht. Der Fortsatz steht, wie in Fig. 7 ersichtlich, durch die beiden seitlichen Schlitze des Hohlprofiles 5 nach außen. Entlang des Randes des Fortsatzes ist eine bogenförmige Verzahnung 31 vorgesehen, in die das Ritzel 22 des Übertragungselementes 8 des Drehantriebes eingreift. Der Lagerzapfen 28 und das Antriebselement 30 sind vorzugsweise miteinander verpreßt, wobei die beiden Teile insbesondere einen unrunden, beispielsweise vier- oder sechskantigen Querschnitt aufweisen, sodaß sich zusätzlich ein Formschluß in Umfangsrichtung ergibt.

Die Montage des Wischerarmdrehlagers 21 auf dem Wischerarm ist äußerst einfach: Nach dem Fixieren des Antriebselementes 30 auf dem Lagerzapfen 28 im Lagerblock 26 wird der Lagerblock 26 von vome in das Hohlprofil 5 eingeschoben, wobei das Ritzel 22 sich in die bogenförmige Verzahnung 31 einschiebt. Der Lagerblock 26 wird in der eingeschobenen Stellung, in der die kraftschlüssige Verbindung zwischen dem Ritzel 22 und dem Antriebselement 30 gegeben ist, durch eine Abdeckung 32 erzielt, die mit federnden Rastelementen 35 und einem Haltezapfen 33 versehen ist. In Verlängerung der Bohrung 27 des Lagerblockes 26 ist auch an der Oberseite des Hohlprofiles 5 eine Bohrung ausgebildet. Die Abdeckung 32 kann nun von oben aufgesetzt werden, wobei der Haltezapfen 33 in die Bohrung 27 eindringt und dadurch den Lagerblock 26 im Hohiprofil 5 fixiert, und wobei die gebogenen Rastelemente 35 das Hohlprofil 5 von beiden Seiten umgreifen und an den Kanten 36 der Seitenschlitze verrasten.

Die Hohlwelle 7 besteht aus einem zylindrischen Rohr und trägt am wischerblattseitigen Ende eine Gleitbuchse 9 mit einem unrunden, beispielsweise 6-kantigen Innenquerschnitt, in die unter Ausbildung eines Formschlusses in Umfangsrichtung die im Querschnitt angepaßte Verlängerungswelle 8 eingreift. Die daher beispielsweise 6-kantige Verlängerungswelle 8 weist diesen angepaßten Querschnitt über eine erste Verschiebelänge des Hohlprofiles 5 auf, die der Längenänderung des Wischerarmes 3 während der Schwenkbewegung zwischen einer kurzen Mittelstellung und einer langen seitlichen Umkehrstellung entspricht. Für die Verschwenkung in die Parkstellung darf die während des Wischvorganges gegebene Relativbewegung zwischen dem Wischerblatt 6 und dem Wischerarm 3 nicht erfolgen. Dies wird dadurch erreicht, daß mit Hilfe des Zahnriemens 15 das Hohlprofil 5 um eine zweite Verschiebelänge weiter eingezogen wird, sodaß der Wischerarm 3 seine kürzeste Länge aufweist. Entsprechend dieser zweiten Verschiebelänge weist die Verfängerungswelle 8 im Anschluß an den zum Formschluß geeigneten Abschnitt einen für den Formschluß mit der Gleitbuchse 9 nicht geeigneten zylindrischen Bereich 10 auf. Sobald also der zylindrische Bereich 10 in die Gleitbuchse 9 eingetreten ist, verdreht sich zwar beim Verschwenken des Wischerarmes 3 die Hohlwelle 7, da sie weiterhin an der Kreisbogenverzahnung 24 abrollt, sie nimmt jedoch die Verlängerungswelle 8 nicht mit. Alternativ kann auch die gesamte Antriebswelle mitverschoben werden, sodaß das Antriebsritzel 23 aus der Kreisbogenverzahnung 24 nach hinten austritt. Die Verdrehung des Wischerblattes 6 durch äußere Einflüsse wird dabei dadurch verhindert, daß die Nase 37 des Haltebügels 29 des Wischerblattes 6 beim Verschieben über die zweite Verschiebelänge in eine Ausnehmung am vorderen Ende des ersten Wischerarmteiles 4 eintritt, sodaß das Wischerblatt dort gehalten ist.

Die Führung des Hohlprofiles 5 im ersten Wischerarmteil 4 kann nochmals verbessert werden, wenn am Schlitten 11 oder am Mitnehmer 18 eine dritte Nut 12 ausgebildet ist, die in einen entsprechenden dritten Steg 13 an der unteren Wand des ersten Wischerarmteiles 4 eingreift. Altemativ kann dort auch die Sensoreinrichtung 19,20 vorgesehen sein, und eine dritte Längsführung an der oberen Seite des ersten Wischerarmteiles ausgebildet werden. Gegebenenfalls ist sogar eine vierseitige Schlittenführung möglich, wenn die Sensoreinrichtung 19,20 nur in einer Teilbreite untergebracht wird.

## Patentansprüche

1. Scheibenwischeranlage, insbesondere für Personenkraftwagen, mit einem hin und her schwenkend angetriebenen Wischerarm (3), der einen ersten um eine Lagerachse schwenkbar gelagerten Wischerarmteil (4) und einen im ersten Wischerarmteil (4) längsverschiebbaren zweiten Wischerarmteil aufweist, an dessen freiem Ende ein Wischerblattdrehlager (21) und ein mit dem Schwenkantrieb gekoppeltes Wischerblatt (6) angeordnet sind, das innerhalb einer ersten Verschiebelänge einen Drehantrieb aufweist, der bei maximaler Verkürzung des Wischerarmes (3) für die Verschwenkung in die Parkstellung außer Funktion gesetzt ist, wobei der Drehantrieb über eine längenveränderbare Antriebswelle erfolgt, **dadurch gekennzeichnet, daß** der zweite Wischerarmteil ein im ersten Wischerarmteil (4) verschiebbares Hohlprofil (5) aufweist, durch das die längenveränderbare Antriebswelle zum Wischerblattdrehlager (21) geführt ist, und daß im Anschluß an die erste Verschiebelänge eine zweite Verschiebelänge definiert ist, innerhalb der bei einem weiteren Verkürzen des Wischerarmes (3) der Formschluß im Drehantrieb aufgehoben ist.

2. Scheibenwischeranlage nach Anspruch 1, **dadurch gekennzeichnet, daß** am hinteren Ende des Hohlprofiles (5) ein Schlitten (11) angeordnet ist, der einander gegenüberliegende Nuten (12) aufweist, und daß der erste Wischerarmteil (4) zwei in einer zur Windschutzscheibe annähemd parallelen Ebene liegende Stege (13) aufweist, die in die Nuten (12) des Schlittens (11) eingreifen.

3. Scheibenwischeranlage nach Anspruch 1 oder 2, **dadurch gekennzeichnet, daß** die Antriebswelle aus einer Hohlwelle (7) und aus einer in der Hohlwelle (7) verschiebbaren Verlängerungswelle (8) zusammengesetzt ist, die über die erste Verschiebelänge in die Hohlwelle (7) in Umfangsrichtung formschlüssig eingreift.

4. Scheibenwischeranlage nach Anspruch 3, **dadurch gekennzeichnet, daß** am Ende der Hohlwelle (7) eine Gleitbuchse (9) vorgesehen ist, deren Querschnittsfläche der Querschnittsfläche der Verlängerungswelle (8) über ihre erste Verschiebelänge entspricht.

5. Scheibenwischeranlage nach Anspruch 1, **dadurch gekennzeichnet, daß** die Verlängerungswelle (8) einen der zweiten Verschiebelänge entsprechenden zylindrischen Bereich (10) aufweist, dessen Durchmesser der lichten Weite der Gleitbuchse (9) entspricht

6. Scheibenwischeranlage nach einem der Ansprüche 1 bis 5, **dadurch gekennzeichnet, daß** im ersten Wischerarmteil (4) ein Zahnriemen (15) über eine vordere Zahnriemenscheibe (12) und über eine hintere, angetriebene Zahnriemenscheibe (16) geführt ist, wobei der Zahnriemen an einem mit dem Hohlprofil (5) verbundenen Mitnehmer (18) befestigt ist.

7. Scheibenwischeranlage nach einem der Ansprüche 1 bis 6, **dadurch gekennzeichnet, daß** dem ersten Wischerannteil (4) und dem Mitnehmer (18) eine Verschiebelängenerfassungsanordnung (19,20) zugeordnet ist

8. Scheibenwischeranlage nach einem der Ansprüche 1 bis 7, **dadurch gekennzeichnet, daß** in das Hohlprofil (5) ein Lagerblock (26) eingesetzt ist, in dem ein sich beim Einsetzen des Lagerblockes (26) mit dem Übertragungselement (8) des Drehantriebs kraftschlüssig verbindendes Antriebselement (30) des Wischerblattes drehbar gelagert ist.

9. Scheibenwischeranlage nach Anspruch 8, **dadurch gekennzeichnet, daß** das Hohlprofit (5) und der Lagerblock (26) miteinander fluchtende Querbohrungen aufweisen, und daß am vorderen Ende des Wischerarmes eine Abdeckung (32) fixiert ist, die einen in beide Querbohrungen eingreifenden Haltezapfen (33) aufweist.

10. Scheibenwischeranlage nach Anspruch 9, **dadurch gekennzeichnet, daß** die Abdeckung (32) auf dem Hohlprofil (5) verrastet ist.

11. Scheibenwischeranlage nach Anspruch 8 oder 9, **dadurch gekennzeichnet, daß** das Antriebselement mit einem Lagerzapfen (28) verbunden ist, der in die Querbohrung (27) des Lagerblockes (26) drehbar eingesetzt ist, und einen Haltebügel (29) aufweist.

12. Scheibenwischeranlage nach Anspruch 8 bis 10, **dadurch gekennzeichnet, daß** der Lagerblock (26) einen wischerarmseitig offenen Schlitz (34) aufweist, und daß im Schlitz (34), mit dem Lagerzapfen (28) verbunden, das Antriebselement (30) angeordnet ist.

13. Scheibenwischeranlage nach Anspruch 12, **dadurch gekennzeichnet, daß** das Antriebsetement (30) eine gebogene Verzahnung (31) aufweist, in die ein am Ende der Verlängerungswelle (8) angeordnetes Ritzel (22) eingreift

## Claims

1. A screen wiper arrangement, in particular for private cars, comprising a wiper arm (3) which is driven with a reciprocating pivotal movement and which has a first wiper arm portion (4) mounted pivotably about a mounting axis and a second wiper arm portion which is longitudinally displaceable in the first wiper arm portion (4) and at the free end of which are arranged a wiper blade rotary mounting (21) and a wiper blade (6) which is coupled to the pivoting drive and which within a first displacement length has a rotary drive which is taken out of operation upon maximum reduction in length of the wiper arm (3) for pivotal movement into the park position, wherein the rotary drive Is effected by way of a variable-length drive shaft, **characterised In that** the second wiper arm portion has a hollow profile member (5) which is displaceable in the first wiper arm portion (4) and through which the variable-length drive shaft is passed to the wiper blade rotary mounting (21), and that defined adjoining the first displacement length is a second displacement length within which the positively locking engagement in the rotary drive is abolished upon a further reduction In length of the wiper arm (3).

2. A screen wiper arrangement according to claim 1 **characterised in that** arranged at the rear end of the hollow profile member (5) Is a slider (11) which has mutually opposite grooves (12) and that the first wiper arm portion (4) has two bars (13) which are disposed in a plane approximately parallel to the windscreen and which engage into the grooves (12) of the slider (11).

3. A screen wiper arrangement according to claim 1 or claim 2 **characterised in that** the drive shaft is composed of a hollow shaft (7) and an extension shaft (8) which is displaceable in the hollow shaft (7) and which engages into the hollow shaft (7) in positively locking engagement in the peripheral direction over the first displacement length.

4. A screen wiper arrangement according to claim 3 **characterised in that** provided at the end of the hollow shaft (7) is a sliding bush (9) whose cross-sectional area corresponds to the cross-sectional area of the extension shaft (8) over the first displacement length thereof.

5. A screen wiper arrangement according to claim 1 **characterised in that** the extension shaft (8) has a cylindrical region (10) which corresponds to the second displacement length and the diameter of which corresponds to the internal width of the sliding bush (9).

6. A screen wiper arrangement according to one of claims 1 to 5 **characterised in that** in the first wiper arm portion (4) a toothed belt (15) is guided over a front toothed belt pulley (12) and over a rear driven toothed belt pulley (16), wherein the toothed belt Is secured to an entrainment member (8) connected to the hollow profile member (5).

7. A screen wiper arrangement according to one of claims 1 to 6 **characterised in that** a displacement length detection arrangement (19, 20) is associated with the first wiper arm portion (4) and the entrainment member (18).

8. A screen wiper arrangement according to one of claims 1 to 7 **characterised in that** fitted into the hollow profile member (5) is a mounting block (26) in which there is rotatably mounted a drive element (30) of the wiper blade, which drive element is connected in force-locking relationship to the transmission element (8) of the rotary drive when the mounting block (26) is fitted.

9. A screen wiper arrangement according to claim 8 **characterised in that** the hollow profile member (5) and the mounting block (26) have mutually aligned transverse bores and that fixed to the front end of the wiper arm is a cover (32) having a holding projection (33) which engages into both transverse bores.

10. A screen wiper arrangement according to claim 9 **characterised in that** the cover (32) is latched on the hollow profile member (5).

11. A screen wiper arrangement according to claim 8 or claim 9 **characterised in that** the drive element is connected to a mounting trunnion (28) which is rotatably fitted into the transverse bore (28) of the mounting block (26), and has a holding loop (29).

12. A screen wiper arrangement according to claims 8 to 10 **characterised in that** the mounting block (26) has a slot (34) which is open at the wiper arm side and that the drive element (30) Is arranged in the slot (34), connected to the mounting trunnion (28).

13. A screen wiper arrangement according to claim 12 **characterised in that** the drive element (30) has a curved tooth arrangement (31) into which engages a pinion (22) arranged at the end of the extension shaft (8).

## Revendications

1. Système d'essuie-glace, en particulier pour les véhicules de tourisme, avec un bras d'essuie-glace (3) entraîné, pivotant selon un mouvement de va-et-vient, qui présente une première partie de bras d'essuie-glace (4) montée de manière pivotante autour d'un axe de palier et une seconde partie de bras d'essuie-glace, qui peut être déplacée longitudinalement dans la première partie de bras d'essuie-glace (4) et à l'extrémité libre de laquelle se trouvent un coussinet de pivotement de balai d'essuie-glace (21) et un balai d'essuie-glace (6) couplé avec l'entraînement pivotant, qui dans une première longueur de déplacement présente un entraînement en rotation, qui, lors du raccourcissement maximal du bras d'essuie-glace (3) est mis hors fonction pour le pivotement en position de parking, moyennant quoi l'entraînement en rotation s'effectue par l'intermédiaire d'un arbre de commande réglable en longueur, **caractérisé en ce que** la seconde partie du bras d'essuie-glace présente un profilé creux (5) qui peut être déplacé dans la première partie du bras d'essuie-glace (4) et par l'intermédiaire duquel l'arbre de commandé réglable en longueur est conduit vers le coussinet de pivotement du balai d'essuie-glace (21) et **en ce qu'**une seconde longueur de déplacement est définie dans la continuité de la première longueur de déplacement, dans laquelle l'engagement mécanique est libéré dans l'entraînement en rotation, lors d'un raccourcissement supplémentaire du bras d'essuie-glace (3).

2. Système d'essuie-glace selon la revendication 1, **caractérisé en ce que**, à l'extrémité arrière du profilé creux (5) se trouve un support (11) qui présente des rainures opposées (12) et **en ce que** la première partie du bras d'essuie-glace (4) présente deux barres (13) situées dans un plan pratiquement parallèle au pare-brise, qui s'insèrent dans les rainures (12) du support (11).

3. Système d'essuie-glace selon la revendication 1 ou 2, **caractérisé en ce que** l'arbre de commande est composé d'un arbre creux (7) et d'un arbre de rallonge (8) qui peut être déplacé dans l'arbre creux (7) et qui, sur la première longueur de déplacement vient en prise de manière positive dans l'arbre creux (7), dans le sens périphérique.

4. Système d'essuie glace selon la revendication 3, **caractérisé en ce que**, à l'extrémité de l'arbre creux (7), une bague de guidage (9) est prévue dont la surface de section transversale correspond à la surface de section transversale de l'arbre de rallonge (8), sur sa première longueur de déplacement.

5. Système d'essuie-glace selon la revendication 1, **caractérisé en ce que** l'arbre de rallonge (8) présente une zone cylindrique (10) correspondant à la seconde longueur de déplacement et dont le diamètre correspond au diamètre intérieur de la bague de guidage (9).

6. Système d'essuie-glace selon l'une quelconque des revendications 1 à 5, **caractérisé en ce que**, dans la première partie du bras d'essuie-glace (4), une courroie dentée (15) est conduite par l'intermédiaire d'une poulie crantée antérieure (12) et d'une poulie crantée postérieure entraînée (16), moyennant quoi la courroie dentée est fixée sur un entraîneur (18) relié avec le profilé creux (5).

7. Système d'essuie-glace selon l'une quelconque des revendications 1 à 6, **caractérisé en ce qu'**un dispositif de saisie de la longueur de déplacement (19, 20) est coordonné à la première partie du bras d'essuie-glace (4) et à l'entraîneur (18).

8. Système d'essuie-glace selon l'une quelconque des revendications 1 à 7, **caractérisé en ce qu'**un bloc de palier (26) est inséré dans le profilé creux (5), dans lequel bloc de palier un élément d'entraînement (30) du balai d'essuie-glace, se reliant par adhérence avec l'élément de transmission (8) de l'entraînement en rotation, lors de la mise en place du bloc de palier (26) est logé de manière rotative.

9. Système d'essuie-glace selon la revendication 8, **caractérisé en ce que** le profilé creux (5) et le bloc de palier (26) présentent des alésages transversaux, alignés l'un par rapport à l'autre et **en ce qu'**à l'extrémité antérieure du bras d'essuie-glace, est fixé un recouvrement (32), qui présente un tenon de maintien (33) qui vient en prise dans les deux alésages transversaux.

10. Système d'essuie-glace selon la revendication 9, **caractérisé en ce que** le recouvrement (32) est encliqueté sur le profilé creux (5).

11. Système d'essuie-glace selon la revendication 8 ou 9, **caractérisé en ce que** l'élément d'entraînement est relié à un tourillon (28), qui est intégré de manière rotative dans l'alésage transversal (27) du bloc de palier (26) et qui présente un étrier de maintien (29).

12. Système d'essuie-glace selon l'une quelconque des revendications 8 à 10, **caractérisé en ce que** le bloc de palier (26) présente une fente ouverte (34) du côté du bras d'essuie-glace et **en ce que** l'élément d'entraînement (30), relié au tourillon (28) est placé dans la fente (34).

13. Système d'essuie-glace selon la revendication 12, **caractérisé en ce que** l'élément d'entraînement (30) présente une denture courbée (31), dans laquelle vient en prise un pignon (22) situé à l'extrémité de l'arbre de rallonge (8).
